# EUROPEAN PATENT APPLICATION

(11) **EP 1 838 036 A2**
(43) Date of publication of application: **26.09.2007**
(21) Application number: 07104352.5
(22) Date of filing: 16.03.2007
(51) Int. Cl.: H04L 12/24

(54) **Failure recovery method and node, and network**

(30) Priority: 22.03.2006 JP 2006078990
(71) Applicant: NEC CORPORATION, Tokyo (JP)
(72) Inventor: Ozaki, Hirokazu, Tokyo (JP)
(74) Representative: Betten & Resch

(57) **Abstract**

Paths are changed quickly without burdening a network when link failure occurs, allowing packets to avoid the location of the failure. A node in a network ascertains tree information of the network by acquiring the tree information from another node or computing the tree information, extracts in advance a node set as a range affected by link failure, based on the ascertained tree information, the node set including incoming and outgoing links of the node as part of the tree, notifies, when link failure is detected, only the affected area that link failure has been detected, and recalculates a path when link failure is detected by the node or when the notification is received from another node. The path recomputation is performed assuming that failure occurred simultaneously on an outgoing link paired with an incoming link whose failure has been detected. The notification is performed by specifying a path in advance.

## Description

### BACKGROUND OF THE INVENTION

### 1. Field of the Invention

The present invention is used in network failure recovery, and more particularly is suitable for use in large-scale networks such as the Internet.

### 2. Description of Related Art

At present, with the ongoing development of the Internet as social infrastructure, quick recovery when there is a network failure is an extremely important issue in terms of improving dependability. Various methods of responding to transmission path failure (optical fiber cut, etc.) or node failure (router or switch failure) have been proposed and put into use.

Generally, device and transmission path redundancy is widely used as a simple, fast and reliable recovery method. Specific examples of transmission path redundancy include Automatic Protection Switching (APS) for SONET/SDH (Synchronous Optical Network/Synchronous Digital Hierarchy), Ethernet (registered trademark) link aggregation, and the like, which are global standards (ITU-T Recommendation G.841, IEEE 802.3ad). Device redundancy is carried out by duplicating the main signal portion and the control portion, for instance.

However, making everything redundant is not realistic because of the increases in device and network size and cost involved. Moreover, the Internet, which is a collection of a large number of networks based on a mesh topology to begin with, essentially has redundancy as a network. Consequently, when a failure occurs, it is possible in most cases to bypass the location of the failure by changing the path of the packets, which has significant cost advantages as a recovery method. However, this requires that the path be recomputed at related nodes based on failure information to configure a new path.

The Internet is constituted by mutually connecting a number of autonomous systems, each of which is basically managed and operated by a single organization, and internally uses the same routing protocol. Open Short Path First (OSPF), Intermediate System to Intermediate System (IS-IS) or the like are typical interior routing protocols (IRP) within autonomous systems that are widely used worldwide (OSPF is standardized by IETF RFC 2328).

These are called link state routing protocols, and paths are, in summary, configured with a method such as the following. Firstly, a weight called a cost is manually set in advance for the incoming and outgoing links of each node. The cost is often generally set in inverse proportion to the amount of traffic on the link.

Next, each node periodically floods (broadcasts) the network with the state and cost of links connected thereto. As a result, all of the nodes share information on the network topology. The path to each node is then determined so as to minimize the path cost for the node. A method called the Dijkstra algorithm is primarily used to compute the paths.

A set of links called a shortest path tree or spanning tree results from the path computation. A tree is the minimum set of links coupling all nodes. A routing table is updated based on information for this tree, as is a forwarding table. Structurally, the routing table is often stored in the control portion, while the forwarding table is often stored in the interfaces.

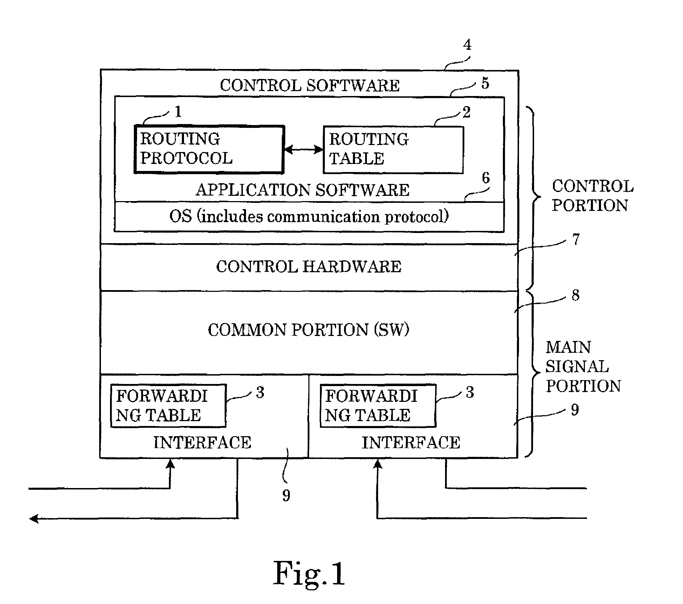

Collection and notification of the aforementioned information, as well as path computation and configuration thereof is all usually performed periodically by software. Fig. 1 shows where the routing protocol is implemented in a node of the embodiment of the present invention and the conventional example. As shown in Fig. 1, the node is constituted by a control portion and a main signal portion. The control portion includes control software 4 and control hardware 7, while the main signal portion includes common portion (switch) 8 and interfaces 9. Further, control software 4 includes application software 5 and OS (includes communication protocol) 6. Application software 5 includes routing protocol 1 and routing table 2. Interfaces 9 each include forwarding table 3.

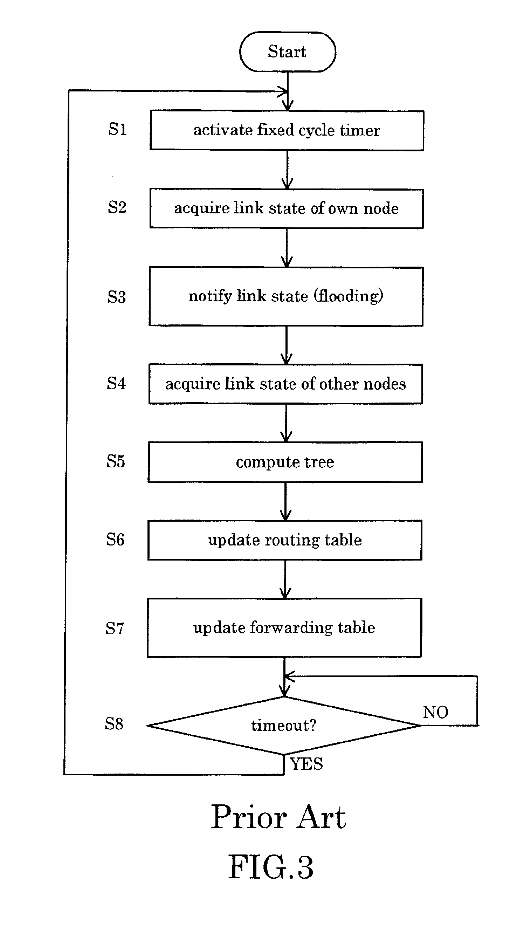

The software is implemented in the portion enclosed by the bold frame (routing protocol 1) in Fig. 1. The processing flow of an existing routing protocol is shown in Fig. 3 (S1 to S8). Note that while the time required to update the paths varies depending on the configured cycle, it is usually takes from a few seconds to a several hundred seconds in some cases.

As shown in Fig. 3, when a fixed cycle timer is activated (S1), firstly the link state of the node is acquired (S2), and notified to other nodes by flooding (S3). Link states notified by other node are acquired (S4) and used to compute a tree (S5), and routing table 2 and forwarding table 3 are updated, together with ascertaining the tree structure of the network (S6, S7). This processing S1 to S7 is repeatedly performed again when the fixed cycle timer times out (S8).

Note that Fig. 3 shows the processing in simplified form and that notification and path recomputation are performed when there has actually been a failure or a change in topology. However, in order to avoid burdening a network flooded with control information, a minimum flooding interval is determined, and notification cannot be performed within this interval even if a failure is detected. With OSPF the minimum interval is five seconds. This is expressed in Fig. 3 as the timer-controlled cyclic processing which also implies the minimum flooding interval.

While recovery time in the event of a failure is reduced by shortening the cycle, the network is burdened due to the frequent flooding of control information, and forwarding of main signal packets is suppressed. The cycle is configured with a trade off between recovery time and network load. If a failure occurs in a certain location, packets passing through the location are discarded and the signal remains down until the next path update. Several proposals have been made in order to reduce signal down time as much as possible (see S. Rai et al., "IP Resilience within an Autonomous System: Current Approaches, Challenges, and Future Directions", IEEE Communications Magazine, October 2005, pp. 142-149).

### SUMMARY OF THE INVENTION

One method proposed heretofore involves shortening the path update cycle and performing fast path recomputation (see C. Alaettinoglu et al., "Towards Millisecond IGP Convergence", IETF Internet Draft 2000). However, excess load is placed on the network because of the frequent flooding of information within the network as previously mentioned. Moreover, the software load on the nodes is also significant because path recomputation is performed for all nodes even in the case of a local failure. There is also a method that involves computing a reserve path beforehand in readiness for a failure (see S. Lee et al., "Proactive vs Reactive Approach to Failure Resilient Routing", Proc. INFOCOM, Mar. 2004 and S. Vellanki et al., "Improving Service Availability During Link Failure Transients through Alternate Routing", Texas A & M University, Tech. rep. TANUECE-2003-02, Feb. 2003). However, this is difficult to realize because of the increased amount of computations in order to respond to all failures.

In US4993015 (hereinafter, referred to as "patent document 3"), a method is proposed in which the node that detects a failure limits the failure notification to nodes connected with the failure. This proposal enables the effect of the failure notification on the network as a whole to be reduced. However, it is not proposed that the node which detects the failure works together with peripheral nodes to efficiently and quickly restore the failure.

An object of the present invention, which was made against this background, is to provide a failure recovery method, a node and a network that enable paths to be changed quickly without burdening the network in the event of link failure occurring in an autonomous packet forwarding network, thereby allowing packets to avoid the location of the failure.

The present invention is a failure recovery method in a node in a network, comprising the steps of ascertaining tree information of the network by acquiring the tree information from another node or computing the tree information; extracting in advance a node set as a range affected by link failure, based on the ascertained tree information, the node set including incoming and outgoing links of the node as part of a tree; notifying, when link failure is detected, only the affected area that link failure has been detected; and recomputing a path when link failure is detected by the node or when the notification is received from another node.

Since this enables failure notification to nodes unrelated to the failure recovery to be eliminated, the network is not burdened when failure recovery is performed. Further, efficient failure recovery can be performed quickly, because a node set that includes incoming and outgoing links of the node as part of the tree is extracted in advance, and failure recovery can be performed by working together with these nodes. Note that realization of the present invention requires that the tree structure of the network be ascertained. Acquisition of tree information can be realized by mutually exchanging tree information between all nodes by flooding or the like, as described in the proposals of JP 2001-230776A and JP 2003-234776A.

Here, a feature of the present invention is described by comparison with the proposal made by patent document 3. While the proposal made by patent document 3 enables the effect of the failure notification on the network as a whole to be reduced, since the failure notification by the node that detects the failure is limited to nodes connected with the failure, as already described, patent document 3 does not make a proposal for the node that detects the failure to efficiently restore the failure by working together with peripheral nodes.

That is, patent document 3 simply detects a failure on a transmission path, and sends a failure notification to a virtual line that passes through nodes affected by the failure, and, unlike the present invention, does not share tree information by the nodes or perform failure notification to a node set that include incoming and outgoing links of the node as part of the tree.

In other words, with the proposal of patent document 3, the destination of the failure notification is only the nodes directly affected by the failure. In contrast, with the proposal made by the present invention, failure notification is performed to nodes that will be useful for restoring the failure (nodes that will be useful for forming a bypass path), even if they are not directly affected by the failure, and the tree structure is changed by the minimum amount necessary. Therefore, failure recovery can be performed more efficiently compared with the proposal of patent document 3.

Path recomputation preferably is performed assuming that a failure has also occurred simultaneously on an outgoing link paired with an incoming link whose failure has been detected. That is, while it is not known whether an outgoing link of the node has actually failed until notification is received from another node for whom the outgoing link is an incoming link, failure recovery can be performed quickly and reliably by treating the outgoing link paired with the incoming link whose failure has been detected by the node as having failed, without waiting for notification from another node.

Also, the notification preferably is performed by specifying a path in advance. Since it is possible that erroneous forwarding may be performed if intermediate nodes use a current (prior to failure) forwarding table, specifying the path ensures that the information reaches the other nodes.

The present invention can also be viewed from the standpoint of a node. That is, the present invention is a node in a network, comprising tree information managing means for ascertaining tree information of the network by acquiring the tree information from another node or computing the tree information; link-sharing node extracting means for extracting in advance a node set as a range affected by link failure, based on the tree information ascertained by the tree information managing means, the node set including incoming and outgoing links of the node as part of a tree; failure notifying means for notifying, when link failure is detected, only the affected area that link failure has been detected; and path recomputing means for recomputing a path when link failure is detected by the node or when the notification is received from another node.

The path computing means preferably performs the path recomputation assuming that failure occurred simultaneously on an outgoing link paired with an incoming link whose failure has been detected. Further, the failure notifying means preferably performs the notification by specifying a path in advance.

The present invention can also be viewed from the standpoint of a network constituted by a node of the present invention.

Further, the present invention can also be viewed from the standpoint of a computer program that causes a general-purpose information processing apparatus to realize functions corresponding to a node of the present invention, by being installed on the information processing apparatus. By recording the program of the present invention to a recording medium, the information processing apparatus can install the program of the present invention using the recording medium. Alternatively, the program of the present invention can also be directly installed on the information processing apparatus via a network from a server holding the program of the present invention.

The node of the present invention can thereby be realized using a general-purpose information processing apparatus.

The present invention enables paths to be changed quickly without burdening the network in the event of link failure occurring in an autonomous packet forwarding network, thereby allowing packets to avoid the location of the failure.

### BRIEF DESCRIPTION OF THE DRAWINGS

Specific embodiments of the present invention will now be described, by way of example only, with reference to the accompanying drawings in which:
Fig. 1 shows where a routing protocol is implemented in a node;
Fig. 2 is a functional block diagram of a node;
Fig. 3 is a flowchart showing an existing algorithm;
Fig. 4 is a flowchart showing the processing procedure of a failure recovery method;
Fig. 5 is a flowchart showing the procedure of process 1;
Fig. 6 is a flowchart showing the procedure of process 2;
Fig. 7 shows the configuration of a tree notification packet;
Fig. 8 shows the configuration of a failure notification packet;
Fig. 9 shows an exemplary network for illustrating the failure recovery method;
Fig. 10a to Fig. 10f illustrate link-sharing nodes;
Fig. 11a to Fig. 11g illustrate the failure recovery method;
Fig. 12a to Fig. 12g illustrate the failure recovery method;
Fig. 13 shows table 1 (link-sharing nodes); and
Fig. 14 shows table 2 (notification packet destination nodes in the event of link failure).

### DETAILED DESCRIPTION OF THE PREFERRED EMBODIMENTS

A failure recovery method, a node and a network of an embodiment of the preset invention will be described with reference to Figs. 1 through 14. The general description of a routing protocol within an autonomous system is as given in the Background of the Invention. The present invention is implemented as software for a node in a network, as shown in Fig. 1. The portion of routing protocol 1 enclosed by the bold frame in Fig. 1 indicates the implementation location.

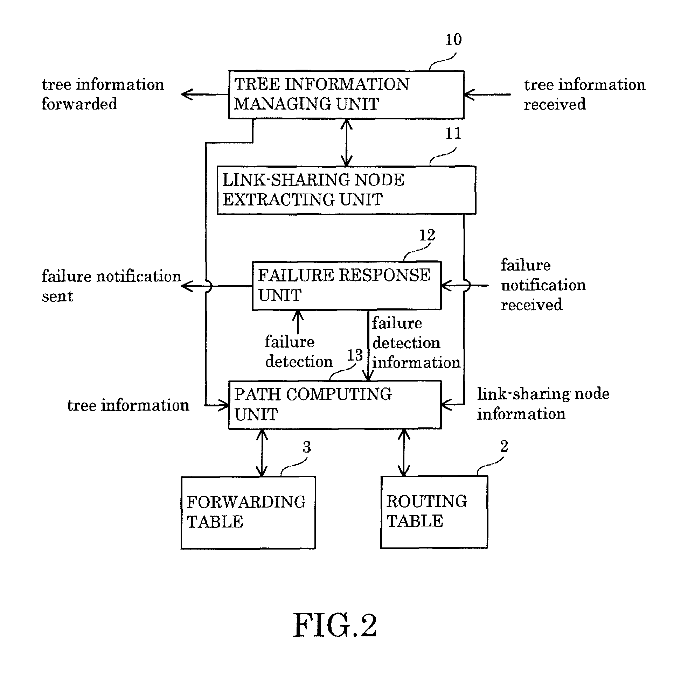

Fig. 2 is a functional block diagram of a node of the present embodiment. When constituted by functional blocks, a node of the present embodiment implementing routing protocol 1 includes link-sharing node extracting unit 11, which extracts, as a range affected by link failure, a node set that includes incoming and outgoing links of the node as part of a tree, failure response unit 12, which performs notification when link failure is detected to notify only the affected range that link failure has been detected, and path computing unit 13, which recomputes the path when the node detects a failure or when the notification is received from another node, as shown in Fig. 2.

Path computing unit 13 recomputes the path assuming that the outgoing link paired with the incoming link whose failure was detected also failed at the same time. Failure response unit 12 performs the notification by specifying a path in advance.

Tree information managing unit 10 ascertains the tree structure of the network by receiving tree information from other nodes, and forwards the tree information to other nodes. Tree information managing unit 10 also ascertains a tree structure that includes the node by ascertaining the link state relating to the node and computing tree information that includes the node, and forwards the computed tree information to other nodes. Path computing unit 13 generates or updates routing table 2 or forwarding table 3 based on the computed path.

Further, the present embodiment can be implemented as a computer program that causes a general-purpose information processing apparatus to realize functions corresponding to the node of the present embodiment as a result of installing the program on the information processing apparatus. This program is able to cause the information processing apparatus to realize functions corresponding to the node of the present embodiment as a result of being installed on the information processing apparatus by being recorded to a recording medium, or as a result of being installed on the information processing apparatus via a communication line.

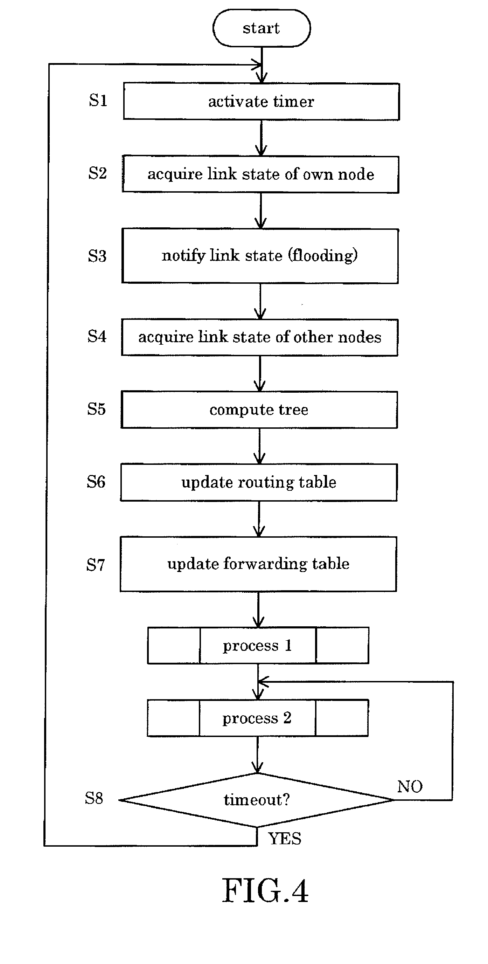

The processing flow of the present embodiment is shown in Fig. 4. Broadly speaking, two processes (processes 1 & 2) are added to the fixed cycle loop based on an existing link-state routing algorithm S1 to S8 shown in Fig. 3 (hereinafter, "the existing algorithm"). Process 1 involves notifying and receiving tree information, and extracting sharing nodes. Process 2 involves recomputing the tree and notifying sharing nodes when a link fails.

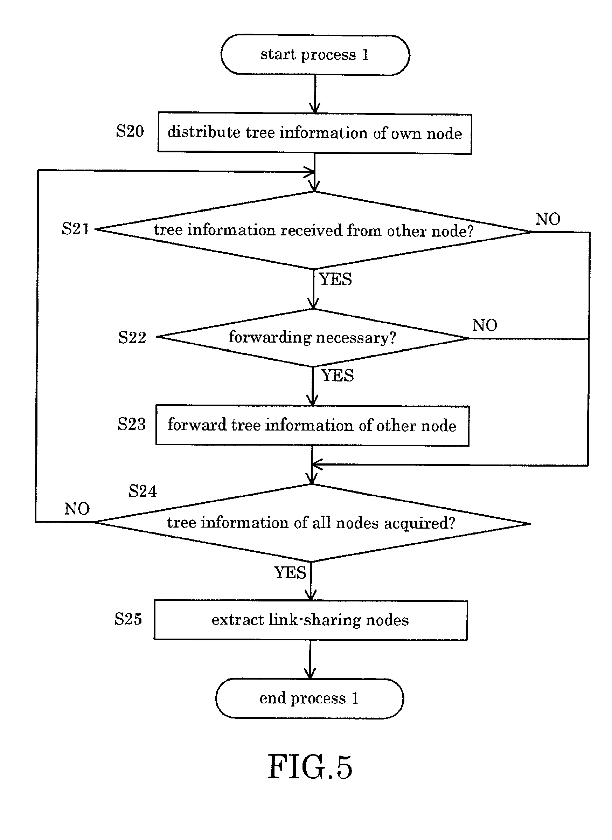

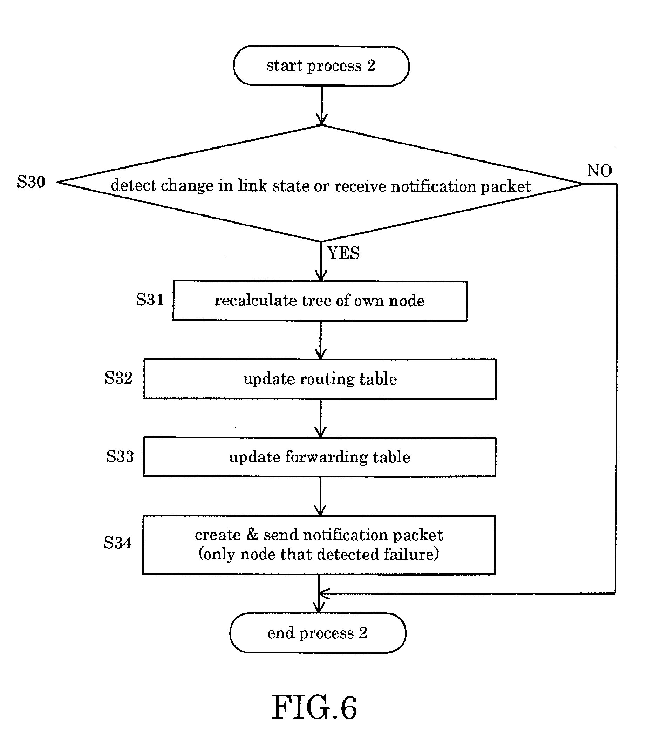

Process 1 (S20 to S25) and process 2 (S30 to S34) are shown in detail in Figs. 5 and 6, respectively. As shown in Fig. 5, process 1 involves tree information managing unit 10 distributing the tree information of the node to other nodes (S20), and receiving tree information from other nodes (S21). If the received tree information needs to be forwarded (S22), tree information managing unit 10 also forwards this tree information to other nodes (S23). When it has thereby been possible to acquire tree information for all nodes (S24), link-sharing nodes are extracted by link-sharing node extracting unit 11 (S25). Link-sharing nodes are defined in the following description. Note that step S20 may also include processing to ascertain a tree structure that includes the node by ascertaining the link state of the node and computing tree information that includes the node, and forward the computed tree information to other nodes.

In process 2, as shown in Fig. 6, when a change in the link state is detected by failure response unit 12 or a notification packet is received by tree information managing unit 10 (S30), path computing unit 13 recomputes the tree relating to the node (S31). Routing table 2 is thereby updated (S32), as is forwarding table 3 (S33). If the node detected the failure, failure response unit 12 creates a packet notifying failure detection, and sends the created packet to link-sharing nodes (S34).

The basic idea behind the present invention involves extracting a range affected by link failure (set of related nodes) in advance, and then immediately computing a path when link failure is detected and notifying the affected range, together with causing paths to be recomputed at the notification destinations.

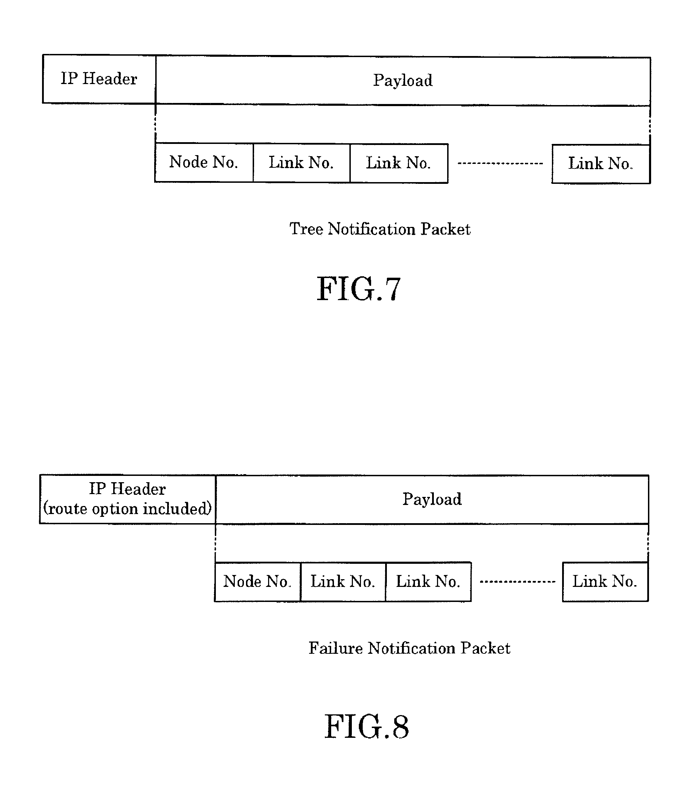

The forwarding of control information is minimized by not notifying nodes that are unrelated to the failure recovery, so as to not burden the network. The node notifies the tree information (set of links) computed with the existing algorithm to all nodes along the path of the tree. The configuration of this notification packet is shown in Fig. 7. A node, having received the notification, stores the tree information in memory, and judges whether the tree information needs to be forwarded to another node.

If the node that received the notification is at the end of the tree, further forwarding is not necessary. If not at the end of the tree, the node forwards the information along the received path. Whether a node is at the end of the tree is judged according to whether an outgoing link of the node is included in the set of received links. All nodes share their respective tree information by performing this type of multicasting.

Next, the node extracts a node set which includes incoming and outgoing links of the node as part of the tree. These nodes are called sharing nodes that share respective links. Sharing nodes are a set of nodes whose tree needs to be changed in order to continue packet forwarding when a link fails. Each node extracts nodes sharing respective links beforehand in preparation for link failure.

The case where an incoming link fails will now be considered. If the node that detected the failure includes the failed link as part of its tree, the tree must be recomputed with the failure factored in. Since there is a possibility that the outgoing link paired with the failed link also failed at the same time, the node that detected the failure stops forwarding packets to that link. That is, the node that detected the failure recomputes the tree assuming that the links in both directions have failed. Nodes sharing these incoming and outgoing links also need to recompute their tree to avoid the failed link.

If neither the failed link nor the paired link is included in the tree of any of the nodes, recomputation is not necessary. The node that detected the failure notifies the nodes sharing the failed links of the failure after recomputing its own tree. The failure notification packet is forwarded along the recomputed tree (tree structure) by unicasting. The configuration of the failure notification packet is shown in Fig. 8. The failure notification packet is transmitted with a path specified in the route option. The path is specified to ensure that the information reaches sharing nodes, because of the possibility of erroneous forwarding occurring if intermediate nodes use a current (prior to failure) forwarding table.

Nodes that receive the notification recompute their path, or tree, based on the failure information, and update the routing and forwarding tables. This updating is performed provisionally until the next fixed cycle operation of the existing algorithm, and the sharing of accurate topology information by the network as a whole is finally secured by the next fixed cycle processing of the existing algorithm.

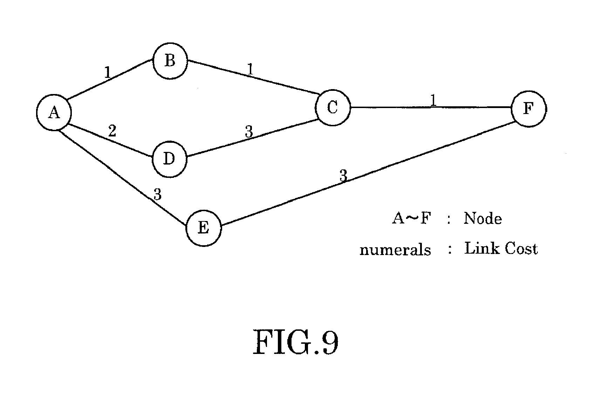

Hereinafter, the above algorithm is described using the network in Fig. 9 as a specific example. A to F in Fig. 9 indicate nodes, while the lines connecting the nodes indicate links. The links in both directions exist independently. For example, node C has three incoming links B→C, D→C and F→C, and three outgoing links C→B, C→D and C→F. The numbers attached to the links indicate costs that are used when computing paths. In this example, the same cost is used in both directions.

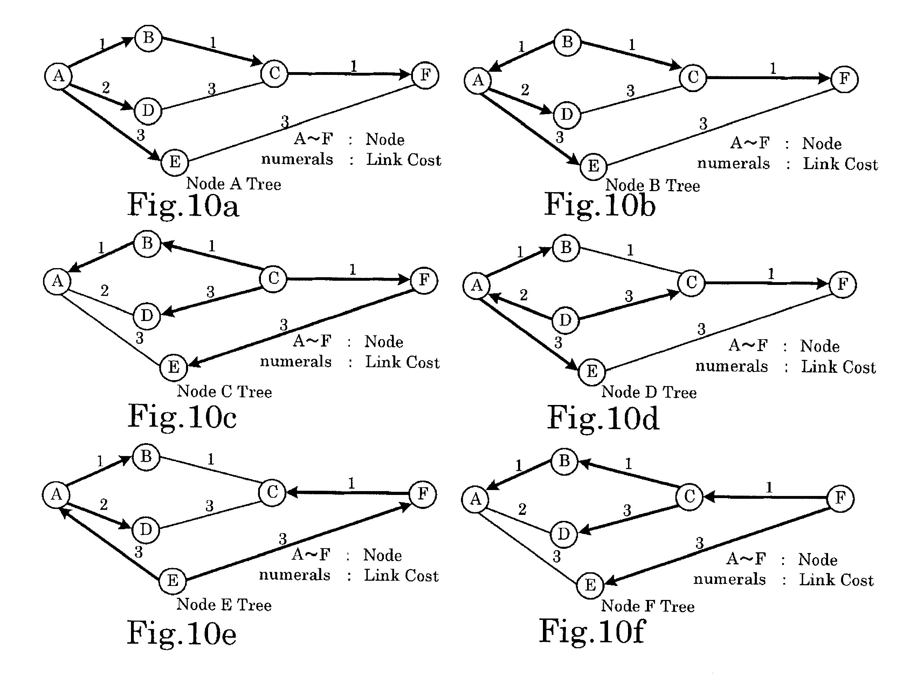

Fig. 10a to Fig. 10f show trees computed for respective nodes with bold arrows. Link B→C is shared by the trees of nodes A and B. Link C→B is shared by the trees of nodes C and F. Consequently, the link-sharing nodes of link B→C are A, B, C and F.

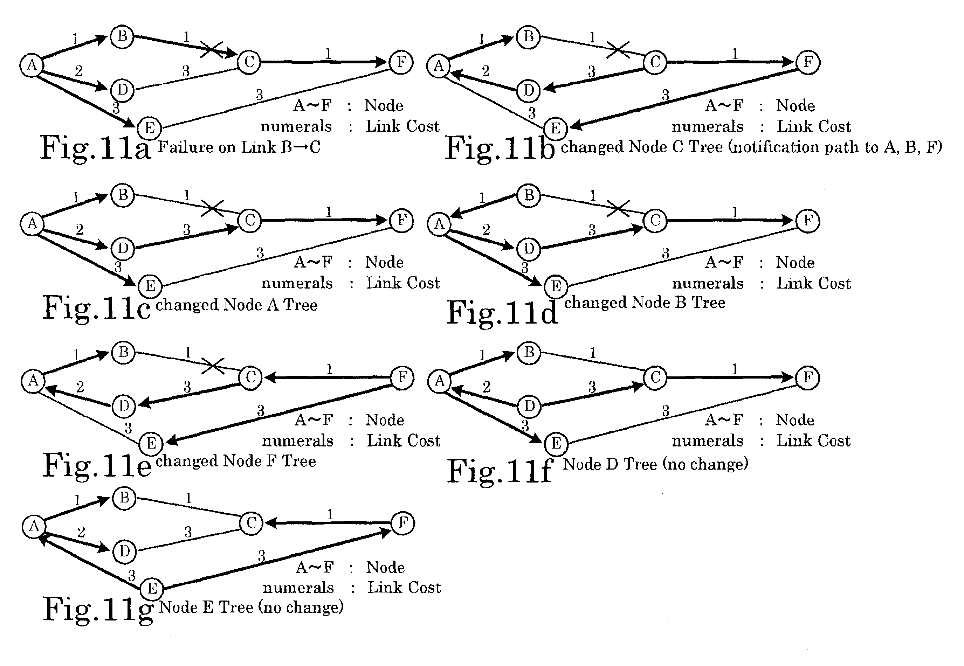

This means that if link B→C fails nodes A, B, C and F will be forced to recompute their tree. Assume that a failure actually occurs on link B→C as shown in Fig. 11a. This is detected by node C, which recomputed its tree based on this information, and updates the routing and forwarding tables. The recomputed tree is shown in Fig. 11b.

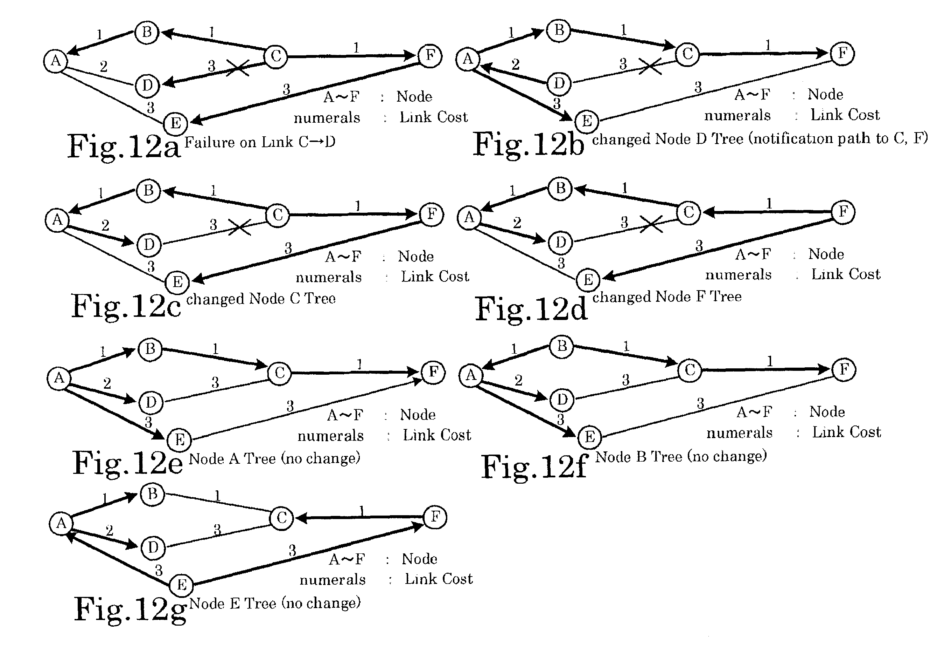

Next, node C notifies the failure separately by unicasting to nodes A, B and F along the newly computed tree. The route option in the notification packet is used at this time to specify the path. Nodes A, B and F, having received the notification, recompute their trees to avoid links B→C and C→B. The recomputed trees of the respective nodes are shown in Figs. 11c, d and e. Nodes D and E are not required to recompute their trees, which include neither link B→C nor link C→B. Consequently, the failure need not be notified to these nodes. Fig. 12a to Fig. 12 f show the change in the trees of respective nodes in the case where link C→D fails. In this case, nodes D, C and F need to change their tree, while nodes A, B and E do not need to change their tree.

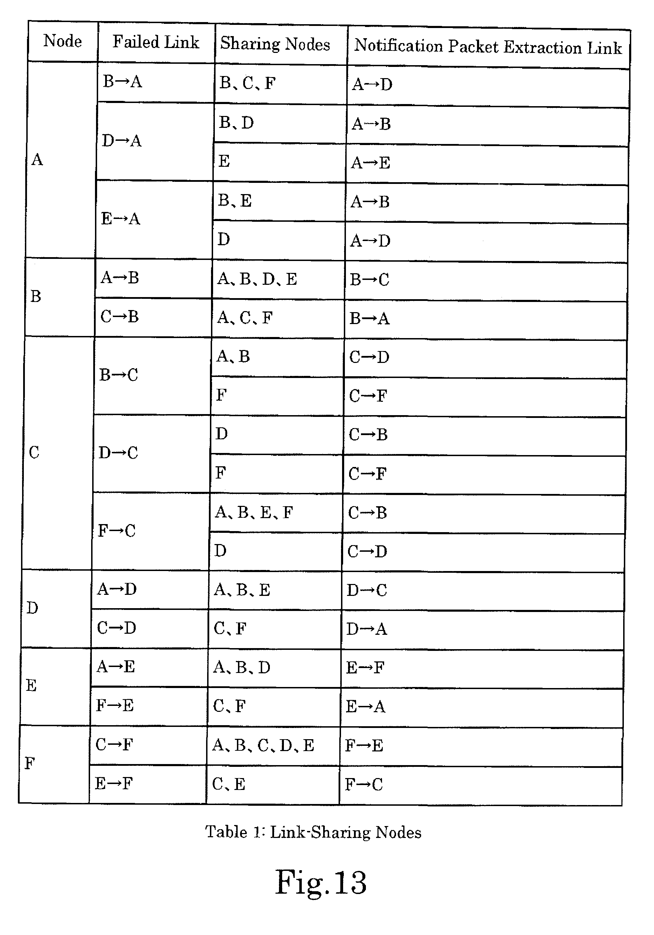

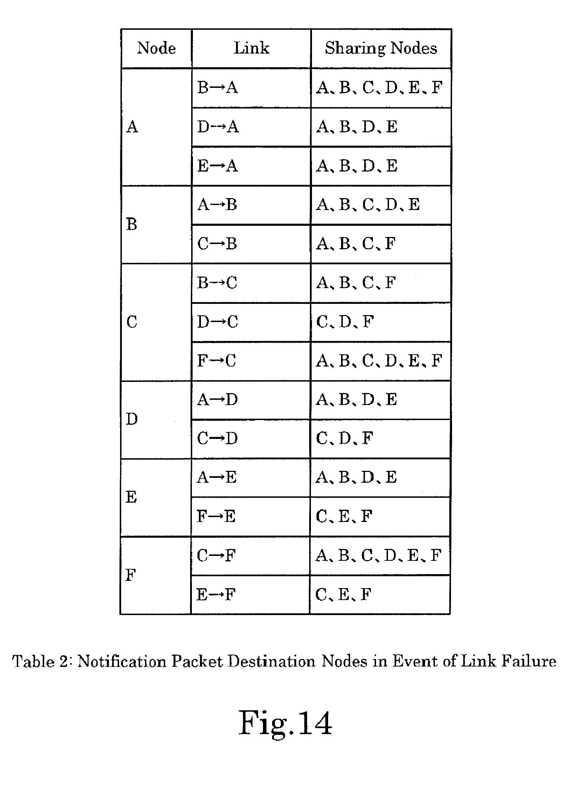

Table 1 in Fig. 13 shows nodes that share the incoming links of each node. Sharing Nodes is information on nodes extracted beforehand in preparation for a failure, as described above. Table 2 in Fig. 14 shows the notification destinations and notification packet transmission links for when link failure occurs. The transmission links are determined once the new tree has been calculated after a failure has occurred.

As aforementioned, the present invention identifies a range affected by link failure in advance, and allows a new path to be quickly computed to bypass the location of the failure by forwarding failure information only to required locations. Distributing the minimum amount of information necessary by the shortest path has the effect of being able to quickly change paths without burdening the network.

While the present invention can be realized by replacing an existing routing protocol with new software, it can also be realized as software that operates in cooperation with an existing protocol by configuring a suitable software interface (additional processing).

According to the present invention, paths can be quickly changed to allow packets to avoid the location of the failure without burdening the network in the event of link failure occurring in an autonomous packet forwarding network, thereby enabling the network to operate efficiently and service quality for network users to be improved.

According to one embodiment the following is provided. Paths are changed quickly without burdening a network when link failure occurs, allowing packets to avoid the location of the failure. A node in a network ascertains tree information of the network by acquiring the tree information from another node or computing the tree information, extracts in advance a node set as a range affected by link failure, based on the ascertained tree information, the node set including incoming and outgoing links of the node as part of the tree, notifies, when link failure is detected, only the affected area that link failure has been detected, and recalculates a path when link failure is detected by the node or when the notification is received from another node. The path recomputation is performed assuming that failure occurred simultaneously on an outgoing link paired with an incoming link whose failure has been detected. The notification is performed by specifying a path in advance.

## Claims

1. A failure recovery method in a node in a network, comprising the steps of
ascertaining tree information of the network by acquiring the tree information from another node or computing the tree information;
extracting in advance a node set as a range affected by link failure, based on the ascertained tree information, the node set including incoming and outgoing links of the node as part of a tree;
notifying, when link failure is detected, only the affected area that link failure has been detected; and
recomputing a path when link failure is detected by the node or when the notification is received from another node.

2. The failure recovery method according to claim 1, wherein the path recomputation is performed assuming that failure occurred simultaneously on an outgoing link paired with an incoming link whose failure has been detected.

3. The failure recovery method according to claim 1 or 2, wherein the notification is performed by specifying a path in advance.

4. A node in a network, comprising:
tree information managing means for ascertaining tree information of the network by acquiring the tree information from another node or computing the tree information;
link-sharing node extracting means for extracting in advance a node set as a range affected by link failure, based on the tree information ascertained by the tree information managing means, the node set including incoming and outgoing links of the node as part of a tree;
failure notifying means for notifying, when link failure is detected, only the affected area that link failure has been detected; and
path recomputing means for recomputing a path when link failure is detected by the node or when the notification is received from another node.

5. The node according to claim 4, wherein the path recomputing means performs the path recomputation assuming that failure occurred simultaneously on an outgoing link paired with an incoming link whose failure has been detected.

6. The node according to claim 4 or 5, wherein the failure notifying means performs the notification by specifying a path in advance.

7. A network constituted by a node as claimed in any of claims 4 to 6.

8. A computer program that causes a general-purpose information processing apparatus to realize functions corresponding to a node as claimed in any of claims 4 to 6, by being installed on the information processing apparatus.
